# EUROPEAN PATENT SPECIFICATION

(11) **EP 0 419 427 B1**
(45) Date of publication and mention of the grant of the patent: **27.07.1994**
(21) Application number: 90830414.0
(22) Date of filing: 21.09.1990
(51) Int. Cl.: B23P 19/08

(54) **A device for fitting seals automatically into the seating grooves of thermoplastic pipe sockets**
Vorrichtung zum automatischen Einsetzen von Dichtungsringen in die Nuten von thermoplastischen Rohrmuffen
Dispositif pour la mise en place d'un joint d'étanchéité dans les rainures des manchons de tubes thermoplastiques

(30) Priority: 22.09.1989 IT 362889
(43) Date of publication of application: 27.03.1991
(73) Proprietor: S.I.C.A. SERRANDE INFISSI CARPENTERIA ATTREZZATURA S.p.A., I-48011 Alfonsine (Ravenna) (IT)
(72) Inventor: Savioli, Leopoldo, I-48011 Alfonsine (Ravenna) (IT)
(74) Representative: Lanzoni, Luciano

(56) References cited:
- EP-A- 0 137 907
- DE-A- 3 710 829
- DE-A- 3 723 091
- NL-A- 275 549
- US-A- 3 851 369

## Description

The invention concerns a device for automatically introducing seals in seating grooves of thermoplastic pipe sockets, of the type comprising:
- a straight tubular element adjacent to and aligned with the pipe socket, having an internal cavity accessible through a peripheral opening, the said cavity having edges, between which a seal is supported transversally to the axis of the socket, resting against an internal wall of the cavity;
- a plunger able to slide internally to the tubular element and the socket, having a front end equipped with an angled frontal surface and having a transversal section which interferes geometrically with the seal supported by the tubular element;
- actuating means by which the plunger is moved parallel to the axis of the tubular element and socket, describing a course comprising a first stage in which the seal contacts with the frontal surface and is gradually inserted into the cavity of the tubular element, assuming an inclined lie, a second stage in which the seal is transferred forwards in an inclined position up until a point where its most advanced part locates in the seating groove, a third and final stage in which the front end of the seal is retained in the seating and the front end of the plunger gradually crosses the seal, inserting a progressively increasing portion into the seating, the said third phase being completed at the limit position wherein the frontal surface of the front end of the plunger has entirely passed across the seating.

To realise pipelines for fluids thermoplastic pipes are frequently used, which are assembled one to another at their ends, the ends being conformed as sockets internally provided with seating grooves in which seals are inserted to seal the fluid transported.

The seals, characteristically annular in shape, are inserted into the tube during the socket formation phase by using known-type devices, quite varied in construction, most of which work by exploiting the elasticity of the material constituting the seal.

The above-mentioned devices essentially perform the following phases:
- an elastic compression phase of the seal, impressing on it a smaller than normal annular configuration;
- a seal introducing phase, with the seal still in its smaller than normal configuration;
- a seal insertion phase into the seating, after a correct positioning of the seal with respect to the seating, and a consequent re-expansion and permanent insertion of the seal in the socket.

Known-type devices of the above-mentioned type, independently of their specific constructional and use characteristics, which are more or less advantageous according to different realisations, all suffer from the fundamental disadvantage of not permitting the introduction of seals made of non-elastic materials into the pipes. Thus with these devices it is not possible to use seals in polypropylene plastic or seals in elastic material equipped with plastic strengthening rings.

This fundamental drawback is obviated by a device, also of known type, corresponding to the preamble of claim 1 (Document EP-A-137907) which permits the introduction of thermoplastic seal pipes into the sealing grooves, which pipes can be made of any material comprising plastic materials or seals made in elastic materials but equipped with plastic strengthening rings.

This last device, differently from the previous ones, has the advantage of permitting total freedom from the necessity to use elastic materials, allowing the housing of seals made with more suitable materials also with regard to the physical-chemical nature of the transported fluids.

It does, however, exhibit the fundamental drawback of not permitting, through its monolithic plunger, a correct and total introduction of the seals in smaller-length sockets, and/or sockets immediately followed by curved tracts of pipeline with narrow section.

This drawback, quite serious also in the case of elastic seals, which maintain a certain self-adapting ability insider the seating groove deriving from their elasticity, is critical for plastic seals, or seal made in stiffened plastic materials.

A second drawback of the known-type device is further constituted by the fact that, concerning the structure of the means aimed at engaging the seal, transferring it and inserting a part of it in the seating before the seating is crossed by the plunger, the device has means comprising a rotary-slidable rod in a cylindrical seating made inthe body of the plunger, provided with a shaped end which shape strictly depends on the geometry of the seal, the shape of the seating the seal is to be inserted in, as well as the sizes of the preceding.

The aim of the present invention is thus to obviate the above-mentioned drawbacks. The invention, as it is characterised in the claims, reaches the said aim by providing a device able to permit of automatically introducing seals made of any kind of material in the seating grooves of thermoplastic pipes having small-length sockets and/or grooves situated close to narrowed sections of the pipe.

The invention reaches the said aim by means of a plunger comprising at least two component parts which are reciprocally slidable along a median plane parallel to the trajectory of the plunger on the activation of actuating means, wherein the said component parts are moved independently in such a way as to minimise the axial mass of the front end of the plunger internally to the socket.

The invention is further provided with means to engage, transfer and subsequently locate a part of the seal in the seating offered by the socket, comprising a lever situtated at a most projecting part of the frontal surface of the plunger, associated to the plunger in such a way as to be slidably oscillating in a parallel plane to the socket axis and longitudinally slidable internally of the plunger seating, interacting with the seal by means of an end of the lever in a way which is automatically adaptable to the shape, dimensions and type of material of the seal.

Devices realised according to the invention thus have the advantages of permitting:
- very cost-effective realisations when considering the range of work offered by them;
- a great versatility of use, since one device alone, even operating on medium-sized diameters, can be used with abny geometry of the seal section;
- the realisation of devices completely independently of the length and shape of the socket, simply by means of realising a characteristic operative element in dismountable and independently movable parts.

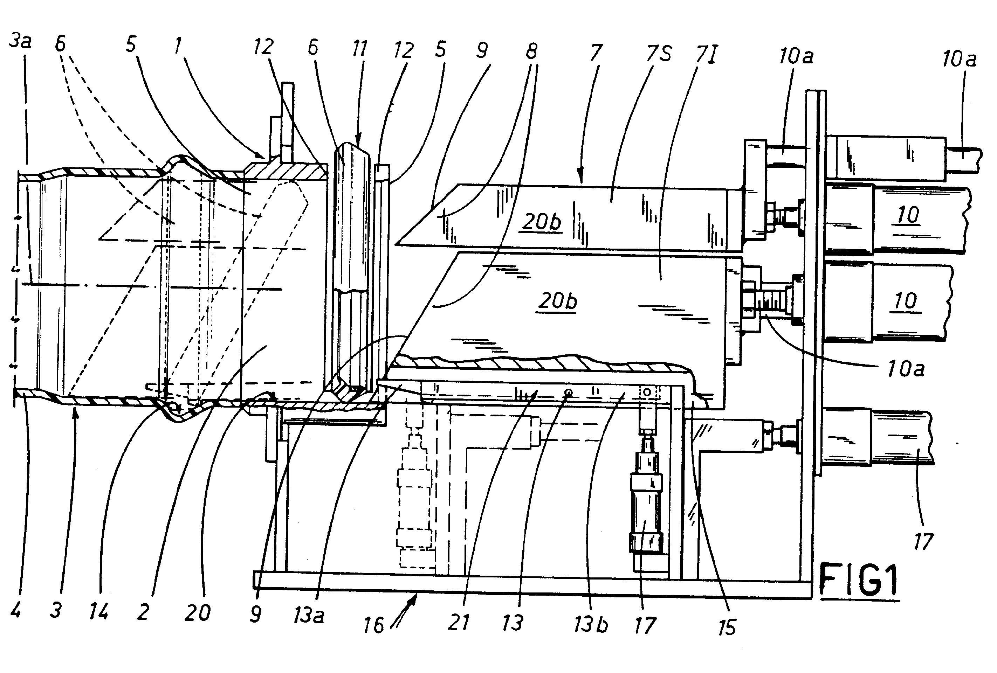

The invention will now be described in detail, by way of example, with the aid of the accompanying drawing, fig. 1, in which the device is illustrated in a general side elevation with certain parts cut away better to reveal others.

With reference to the drawing, 16 denotes a device by means of which to fit seals 6 automatically into the seating grooves 14 afforded by the sockets 3 of thermoplastic pipes 4.

Such a device 16 essentially comprises:
- a straight tubular element 1 offered immediately adjacent to and in alignment with the socket 3 of a pipe 4 and serving to support a seal 6 of external diameter greater than the internal diameter of the socket 3;
- a plunger 7 capable of sliding movement within both the tubular element 1 and the socket 3, by which a seal 6 supported in the tubular element 1 is inserted into the seating groove 14;
- means 10 by which to actuate the plunger 7 automatically.

The tubular element 1 affords an internal cavity 2 with a cylindrical wall 20 of diameter identical to that of the socket 3, which in addition to its two open ends 5 is also accessible through a peripheral slot 11 of which the two edges 12 are designed to support a single seal 6 standing upright in a plane transverse to the axis 3a of the socket and resting on the internal wall 20 of the cavity 2 at bottom.

The forwardmost end 8 of the plunger 7 directed toward the tubular element 1 presents an angled frontal surface 9; moreover, the cross section of the forwardmost end 8 is shaped in such a way as to interfere geometrically with a seal 6 occupying the slot 11 of the tubular element.

In the preferred embodiment of the device 16 shown in the accompanying drawing, the forwardmost end 8 of the plunger 7 is cylindrical and exhibits an external diameter identical to the diameter of the cavity 2, such that on insertion of the plunger 7 into the cavity, this same cylindrical end 8 will physically encounter a seal 6 currently occupying the slot 11.

The plunger 7, actuated by automatic means 10 as aforementioned, reciprocates along a rectilinear trajectory coinciding substantially with the axis of alignment 3a between the tubular element 1 and the socket 3.

In a preferred embodiment, such automatic actuator means 10 might be embodied simply as pneumatic cylinders, operated in conjunction with parallel guide rods 10a by which any unwarranted angular movement of the plunger 7 is prevented.

The operation of the device 16 described thus far will best be appreciated by observing the steps which take place during passage of the plunger 7 along its trajectory, departing from an initial position, shown by the bold line of the drawing, in which the plunger 7 is positioned in alignment with but externally of the tubular element 1.

In a first stage of its forward stroke, the plunger 7 is moved away from the initial position toward the tubular element 1, and enters the cavity 2.

On covering a short distance internally of the cavity 2, the angled surface 9 will impinge on the seal 6 and force it gradually forward until fully inside the cavity 2; needless to say, the seal 6 must necessarily assume an angled position in order to enable its insertion into the cavity 2, given its greater diametral dimensions. Thereafter, with the plunger 7 continuing to advance, the seal 6 is forced further to the point where its leading edge encounters the profile of the seating groove 14 afforded by the socket 3. This same leading edge of the seal 6 now locates in the groove 14, thereby creating an obstacle to further translatory motion, with the result that the forwardmost end 8 of the still advancing plunger 7 begins to pass through the seal 6 and thus locks the arrested leading edge forcibly in the groove 14. As the plunger 7 drives further forward and the cylindrical end 8 continues to force through the seal 6, the seal itself will become seated to a progressively greater degree in the groove 14 and its angle of inclination will grow less and less pronounced. In effect, while the forwardmost end 8 of the plunger 7 exerts a frontal thrust, the lateral surface denoted 20b invests the seal 6 tangentially and works it by degrees into the groove 14.

Full insertion of the seal is accomplished once the angled surface 9 has passed completely beyond the groove 14 and the seal 6 has been worked completely into the relative profile.

In a more advantageous and comprehensive embodiment of the device, the plunger 7 comprises a lever 13, accommodated internally of a longitudinal chase 15 formed in the surface of the plunger and extending back from the farthest extremity of the forwardmost end 8, which is anchored to the plunger 7 itself in such a manner as to permit both of rotation about a pivot 21 and of sliding longitudinally in relation to the plunger 7.

The lever 13 is embodied with one end 13a formed as a seating element, and with its remaining end 13b connected to means 17 by which the lever itself is actuated prior to actuation of the plunger 7 as a whole. These further actuator means 17 enable the lever 13 both to pivot and to traverse in relation to the plunger 7 in such a way as to engage the seal 6 during the traverse movement and carry it forward by the leading edge through the tubular element 1, and by pivoting thereafter, to press the leading edge into the groove 14 in readiness for the full seating action performed by the plunger 7. It will be clear enough that the adoption of the lever 13 provides added positioning stability when locating the leading edge of the seal 6 in the groove 14 during this initial part of the seating operation.

To enable the insertion of seals 6 in sockets 3 of reduced axial dimensions, such as those afforded by pipes 4 incorporating bends, the plunger 7 can be embodied to advantage in a plurality of separable component section, and in the particular example of fig 1, in two sections 7S and 7I which combine to exhibit the same external geometry as that of a one-piece plunger 7, but are slidable in relation to one another along a plane disposed parallel to the trajectory of the plunger 7.

The component sections 7S and 7I can therefore be actuated independently in such a way as to perform all the functions of the plunger 7 described thus far, while requiring a minimum of axial clearance internally of the socket 3. In this instance, the two component sections 7S and 7I will be operated independently by the automatic actuator means 10, in such a way that the section 7S farthest removed from the lever 13 can be made to continue forward after movement of the other section 7I has already ceased.

## Claims

1. A device for automatically introducing seals in grooved seatings provided with thermoplastic pipe sockets, comprising:
- a straight tubular element (1) adjacent to and aligned with the pipe socket (3), aimed at supporting a seal (6) having an external diameter greater than an internal diameter of the socket (3), the tubular element (1) having an internal cavity (2) accessible through a peripheral opening (11) with edges (12) between which edges (12) the seal (6) is supported transversally to an axis (3a) of the socket (3) resting against an internal wall (20) of the cavity (2);
- a plunger (7) able to slide internally to the tubular element (1) and the socket (3), having a front end (8) equipped with an angled frontal surface (9) and having a transversal section which interferes geometrically with the seal (6) supported by the tubular element (1);
- actuating means (10, 10a) by which the plunger (7) is moved parallel to the axis (3a) of the tubular element (1) and socket (3), describing a course comprising a first stage in which the seal (6) contacts with the frontal surface (9) and is gradually inserted into the cavity (2) of the tubular element (1), assuming an inclined lie, a second stage in which the seal (6) is transferred forwards in an inclined position up until a point where its most advanced part locates in the seating groove (14), a third and final stage in which the front end of the seal (6) is retained in the seating (14) and the front end of the plunger (7) gradually crosses the seal (6), inserting a progressively increasing portion into the seating (14), the said third phase being completed at the limit position wherein the frontal surface (8) of the front end of the plunger (7) has entirely passed across the seating (14), **characterised in that** the said plunger (7) comprises at least two component parts (7s, 7i) which are reciprocally slidable along a median plane parallel to a trajectory of the plunger (7), moved by the actuating means (10, 10a), in such a way as to minimise the axial mass at the front end (8) of the plunger (7) inside the socket (3).

2. A device as in claim 1, comprising means to engage, transfer and subsequently locate a part of the seal (6) in the seating (14) offered by the socket (3), which means are contained in a longitudinal and peripheral seating (15) made in the plunger (7), **characterised in that** the means comprise a lever (13) situated in a most projecting part of the frontal surface (9) of the plunger (7) and constrained to the plunger (7) so as to be rotatably oscillating in a plane containing the axis (3a) and longitudinally slidable internally of the seating (15).

3. A device, as in claim 1, **characterised in that** the said component parts (7s, 7i) have mutually different dimensions.

4. A device as in claim 1, **characterised in that** the said component parts (7s, 7i) of the plunger (7) have differently inclined frontal surfaces (9) with respect to the axis (3a) of the said cavity (2) of the tubular element (1).

5. A device as in claim 4, **characterised in that** the said frontal surfaces (9) of the said component parts (7s, 7i) exhibit projections which are reciprocally superposable on the axis (3a) of the said cavity (2).

## Patentansprüche

1. Vorrichtung zum automatischen Einsetzen von Dichtungen in genutete Sitze, die in Muffen von Kunststoffrohren vorgesehen sind, enthaltend:
- ein geradliniges rohrförmiges Element (1), an die Rohrmuffe (3) angrenzend und zu dieser ausgerichtet und dazu bestimmt, eine Dichtung (6) zu tragen, die einen grösseren Aussendurchmesser hat als der Innendurchmesser der Muffe (3), wobei das rohrförmige Element (1) eine innenliegende Vertiefung (2) aufweist, welche durch eine umlaufende Öffnung (11) mit Kanten (12) zugänglich ist, zwischen welchen Kanten (12) die Dichtung (6) quer zu einer Achse (3a) der Muffe (3) und an einer internen Wand (20) der Vertiefung (2) anliegend gehalten wird;
- einen Schubkolben (7), in der Lage, im Inneren des rohrförmigen Elementes (1) und der Muffe (3) zu gleiten und ein vorderes Ende (8) aufweisend, das mit einer angewinkelten frontalen Fläche (9) versehen ist und einen Querschnitt hat, der geometrisch mit der von dem rohrförmigen Element (1) getragenen Dichtung (6) interferiert;
- Antriebsmittel (10, 10a), durch welche der Schulbkolben (7) parallel zu der Achse (3a) des rohrförmigen Elementes (1) und der Muffe (3) verschoben wird, wobei er einen Verlauf beschreibt, der eine erste Phase enthält, in welcher die Dichtung (6) in Kontakt mit der frontalen Fläche (9) kommt und allmählich in die Vertiefung (2) des rohrförmigen Elementes (1) eingeschoben wird und eine geneigte Lage einnimmt; eine zweite Phase, in welcher die Dichtung (6) in einer geneigten Position bis zu einem Punkt vorgeschoben wird, an welchem ihr am weitesten vorgeschobener Teil in den genuteten Sitz (14) eingesetzt wird, eine dritte und abschliessende Phase, in welcher das vordere Ende der Dichtung (6) in dem Sitz (14) gehalten wird und das vordere Ende des Schubkolbens (7) allmählich durch die Dichtung (6) läuft und dabei nach und nach einen immer grösseren Teil derselben in den Sitz (14) schiebt, wobei die genannte dritte Phase an der Grenzposition komplettiert ist, in welcher die frontale Fläche (9) des vorderen Endes des Schubkolbens (7) vollkommen den Sitz (14) durchlaufen hat, **dadurch gekennzeichnet,** dass der genannte Schubkolben (7) wenigstens aus zwei Teilen (7s, 7i) besteht, die zueinander entlang einer mittleren Ebene parallel zu der Bahn des Schubkolbens (7) gleitbar sind, der durch die Antriebsmittel (10, 10a) auf solche Weise verschoben wird, dass die axiale Masse an dem vorderen Ende (8) des Schubkolbens (7) im Inneren der Muffe (3) auf ein Minimum begrenzt wird.

2. Vorrichtung nach Patentanspruch 1, enthaltend Mittel zum Greifen, Weiterleiten und anschliessenden Einsetzen eines Teiles der Dichtung (6) in den von der Muffe (3) aufgewiesenen Sitz (14), welche Mittel in einem sich längs erstreckenden und umlaufenden und in den Schubkolben (7) eingearbeiteten Sitz (15) enthalten sind, **dadurch gekennzeichnet**, dass die Mittel einen Hebel (13) enthalten, der an dem am weitesten vorgeschobenen der frontalen Fläche (9) des Schubkolbens (7) angeordnet und an den Schubkolben (7) gebunden ist, so dass er drehbar auf einer Ebene, welche die Achse (3a) enthält, schwingbar und in Längsrichtung im Inneren des Sitzes (15) gleitbar ist.

3. Vorrichtung nach Patentanspruch 1, **dadurch gekennzeichnet**, dass die genannten Teile (7s, 7i) unterschiedliche Abmessungen zueinander haben.

4. Vorrichtung nach Patentanspruch 1, **dadurch gekennzeichnet**, dass die genannten Teile (7s, 7i) des Schubkolbens (7) im Verhältnis zu der Achse (3a) der genannten Vertiefung (2) des rohrförmigen Elementes (1) unterschiedlich geneigte frontale Flächen (9) aufweisen.

5. Vorrichtung nach Patentanspruch 4, **dadurch gekennzeichnet,** dass die genannten frontalen Flächen (9) der genannten Teile (7s, 7i) Vorsprünge aufweisen, die auf der Achse (3a) der genannten Vertiefung (2) gegenseitig überlagerbar sind.

## Revendications

1. Dispositif pour l'introduction automatique de garnitures d'étanchéité dans des logements cannelés pourvus de tulipes de tuyaux thermoplastiques, comprenant:
- un élément tubulaire rectiligne (1) attenant à, et aligné avec la tulipe (3) du tuyau, destiné à supporter une garniture d'étanchéité (6) ayant un diamètre extérieur plus large que le diamètre intérieur de la tulipe (3), l'élément tubulaire (1) ayant une cavité intérieure (2) accessible à travers une ouverture périphérique (11) pourvue de bords (12) entre lesquels la garniture d'étanchéité (6) est supportée transversalement à un axe (3a) de la tulipe (3) prenant appui contre une paroi intérieure (20) de la cavité (2);
- un piston de poussée (7) susceptible de coulisser à l'intérieur de l'élément tubulaire (1) et de la tulipe (3) et muni d'une extrémité avant (8) présentant une surface (9) antérieure inclinée et une section transversale interférant géometriquement avec la garniture d'étanchéité (6) supportée par l'élément tubulaire (1);
- des moyens d'actionnement (10, 10a) par lesquels le piston (7) est déplacé parallèlement à l'axe (3a) de l'élément tubulaire et de la tulipe (3), décrivant une course comprenant une première étape dans laquelle la garniture d'étanchéité (6) vient en contact avec la surface avant (9) et est introduite graduellement dans la cavité (3) de l'élément tubulaire (1), ladite garniture prenant une disposition inclinée, une deuxième étape dans laquelle la garniture d'étanchéité (6) est transférée en avant, en position inclinée, jusqu'à un point où sa portion la plus avancée prend place dans le logement cannelé (14), une troisième étape, finale, dans laquelle l'extrémité avant de la garniture d'étanchéité (6) est retenue dans le logement (14) et l'extrémité avant du piston (7) passe graduellement à travers la garniture (6), de sorte qu'une portion allant augmentant est insérée dans le logement (14), ladite troisième étape étant complétée à une position de fin de cours où la surface avant (8) de l'extrémité avant du piston (7) a traversé complètement le logement (14), caractérisé en ce que ledit piston (7) comporte au moins deux parties composantes (7s, 7i) qui sont coulissantes l'une par rapport à l'autre le long d'un plan médian parallèle à la trajectoire du piston (7) et mues par les moyens d'actionnement (10, 10a) de manière à rendre minimum l'encombrement axial de ladite extrémité (8) du piston (7) à l'intérieur de la tulipe (3).

2. Dispositif selon la revendication 1, comprenant des moyens pour engager, transférer et ensuite mettre en place une partie de la garniture d'étanchéité (6) dans le logement (14) présenté par la tulipe (3), ces moyens étant contenus dans un siège longitudinal et périphérique (15) ménagé dans le piston (7), caractérisé en ce que les moyens comportent un levier (13) situé en correspondance de la partie la plus saillante de la surface avant (9) du piston (7) et engagé au piston (7) de manière à pouvoir osciller à rotation dans un plan contenant l'axe (3a) et coulisser longitudinalement à l'intérieur du logement (15).

3. Dispositif selon la revendication 1, caractérisé en ce que lesdites parties composantes (7s, 7i) ont des dimensions différentes entre elles.

4. Dispositif selon la revendication 1, caractérisé en ce que lesdites parties composantes (7s, 7i) du piston (7) ont des surfaces avant (9) inclinées de manière différente par rapport à l'axe (3a) de ladite cavité (3) de l'élément tubulaire (1).

5. Dispositif selon la revendication 4, caractérisé en ce que lesdites surfaces avant (9) desdites parties composantes (7s, 7i ) présentent des saillies qui sont réciproquement superposables sur l'axe (3a) de ladite cavité (2).
